# EUROPEAN PATENT APPLICATION

(11) **EP 2 124 161 A1**
(43) Date of publication of application: **25.11.2009**
(21) Application number: 09160366.2
(22) Date of filing: 15.05.2009
(51) Int. Cl.: G06F 17/30

(54) **Data integration method**

(30) Priority: 20.05.2008 TW 97118500
(71) Applicant: Hong-Guang Info Tech Co., Ltd., Banqiao City 220, Taiwan (TW)
(72) Inventor: Chang, Tsung-Hsin, Banqiao City 220 (TW)
(74) Representative: Viering, Jentschura & Partner

(57) **Abstract**

A data integration method includes the steps of: selecting an item from a first data set as a key variable; generating a second data set including the key variable; using the key variable to associate the first and second data sets and inputting the first and second data sets into a processor to generate a third data set; and checking an accuracy of the third data set against a criterion and storing the third data set if the criterion is met. With this data integration method, a data set having a small number of samples can be expanded so as to have a larger number of samples, solving the problem of asymmetry between active and passive data sets and thereby maximizing data use.

## Description

### BACKGROUND OF THE INVENTION

### 1. Technical Field

The present invention relates to a data integration method capable of solving the problem of asymmetry between contents of different data sets, so that the data sets can be integrated and used without a limitation of format difference. The present invention also relates to a data integration method capable of expanding a data set having a small number of samples into a data set having a larger number of samples.

### 2. Description of Related Art

It is common practice for a business entity of any trade to conduct questionnaire surveys in order to know whether or not its service or product is accepted or liked by the consumers, so that improvements can be made according the consumers' evaluation of the service or product.

The questionnaire in a market research (MR) is designed in accordance with the needs of the commissioning party and therefore falls into the category of active data. Since the items in the questionnaire are adjustable to include whatever the commissioning party wishes to know, the questionnaire may advantageously comprise a large number of items (variables). However, the interviews incur a high cost of manpower only to obtain a small number of samples, so that the data collected fail to represent all the intended subjects. On the other hand, the sales records or customers' purchase records at a point of sales (POS) constitute a data set having a large number of samples. Data of this kind are passive because they only contain such simple items as dates, items sold and prices paid, and lack further information such as shopping habits, so that the samples, though large in number, cannot be used as a basis for decision making regarding service improvement or the development of new products.

Nowadays, data asymmetry as described above is a common phenomenon in commercial as well as non-commercial fields. As a result, a data user cannot find the most reliable data for study or as a reference for decision making. Sometimes it is even necessary to create a new data set for a particular purpose, which is very cost-ineffective.

In view of the above, the inventor of the present invention provides a data integration method for solving the various data-related problems.

### BRIEF SUMMARY OF THE INVENTION

Hence, a primary objective of the present invention is to provide a data integration method capable of integrating data sets having different contents into a new data set having value for comprehensive reference, thereby maximizing data use and saving the cost of generating a new data set.

A secondary objective of the present invention is to provide a data integration method capable of systematic prediction and estimation for expanding a data set having a small number of samples into a data set having a larger number of samples, so that the latter data set contains sufficient dimensions for reference and can serve as an effective reference for study or decision making.

To achieve these objectives, the data integration method according to the present invention comprises the following steps:
a) selecting an item from a first data set as a key variable;
b) generating a second data set including the key variable;
c) using the key variable to associate the first and second data sets and inputting the first and second data sets into a processor to generate a third data set; and
d) checking an accuracy of the third data set against a criterion and storing the third data set if the criterion is met or resuming the step c) if the criterion is not met.

In the data integration method disclosed above, the first and second data sets are both defined as active data sets or passive data sets. Alternatively, one of the first and second data sets is defined as an active data set and the other as a passive data set. The third data set is a predicted, estimated or mapped data set generated through an integration of the first and second data sets.

Using the method disclosed above, the respective advantages of the first and second data sets can be combined while their respective drawbacks compensated, so as to generate a new data set having the features of both the first and second data sets. The new data set not only has the multi-dimensions of the old data sets (such as those in MR) for providing more comprehensive information, but also the sufficient number of samples in the old data sets (such as those at the POS) for increasing data reliability. Thus, the method of the present invention is capable of solving the drawbacks associated with the use of all kinds of asymmetric data and providing a convenient and low-cost data integration approach.

### BRIEF DESCRIPTION OF THE SEVERAL VIEWS OF THE DRAWINGS

Other features of the present invention as well as a preferred mode of use, further objectives and advantages thereof will best be understood by reference to the following detailed description of illustrative embodiments when read in conjunction with the accompanying drawings, wherein:
Fig. 1 is a flow chart of a first embodiment of the present invention;
Fig. 2 is a flow chart of a second embodiment of the present invention; and
Fig. 3 is a schematic drawing showing the operating principle of a method of the present invention.

### DETAILED DESCRIPTION OF THE INVENTION

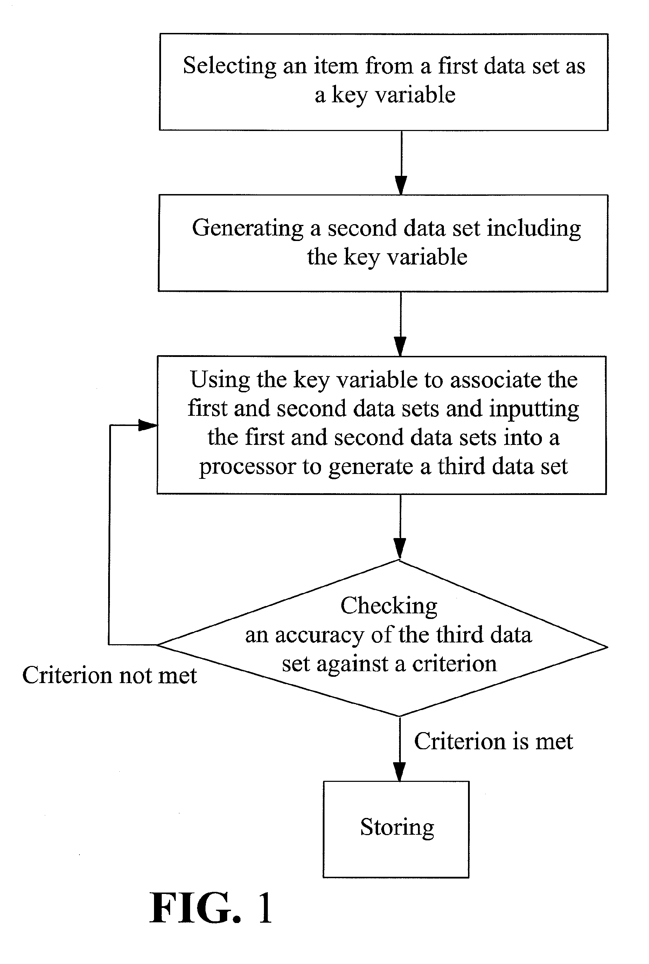

Referring to Fig. 1 for a flow chart of a first embodiment of the present invention, a data integration method according to the present invention comprises the steps of:
a) selecting an item from a first data set as a key variable;
b) generating a second data set including the key variable;
c) using the key variable to associate the first and second data sets and inputting the first and second data sets into a processor to generate a third data set; and
d) checking an accuracy of the third data set against a criterion and storing the third data set if the criterion is met or resuming the step c) if the criterion is not met.
   In the step a), the first data set can be any data set containing multiple items of contents or data, including a POS record such as an invoice specifying items bought, time of purchase and prices; user raw data; or human resources data. Such a data set is obtained passively each time a certain action is performed and can therefore be defined as a "passive data set". The key variable refers to an item selected from the first data set and later used to generate the second data set and associate the first and second data sets, wherein the key variable serves as a common, identifiable item between the first and second data sets. The key variable can be any item selected from the first data set.
   In the step b), the second data set is designed according to the key variable of the first data set and can therefore include information not obtained or not represented in the first data set, thereby generating a data set having more items and more dimensions than the first data set. For instance, the key variable can be an item selected from a POS retail record, so that an MR questionnaire can be designed to have more comprehensive interviewing questions and encompass more dimensions. Since the items in the second data set can be designed according to the information desired, the second data set can be defined as an "active data set." However, there is neither a strict distinction as to which of the first and second data sets is active or passive, nor a logical relation therebetween. And yet it is certain that the two data sets are asymmetric due to the contents therein or data types thereof, such that one data set contains more data than the other, wherein the two data sets have at least one common item that can serve as the key variable.
   The step c) comprises using the key variable to associate the first and second data sets, establishing a statistical model, and generating the third data set according to the statistical model. The association of the first and second data sets can be implemented with "Structured Query Language (SQL)" to facilitate association between individual data. Furthermore, as the data may come from different sources and have different formats, it is preferable that the data go through an ETL data organizing process comprising extraction, transformation and loading, before the statistical model is established, so that incorrect or insufficiently organized raw data are cleaned to increase the accuracy of subsequent steps. The ETL process can be omitted if the data come from a source that has already been organized. Besides, the statistical model can be established using various statistical tools such as linear regression, curvilinear regression, K-mean, time series and other related models. Logistic regression is employed in an exemplary embodiment of the present invention described below.
   In the step c), after the statistical model is established, one of the first and second data sets is fitted into the statistical model to predict and thereby generate the third data set. It is preferable to choose one of the first and second data sets that has the larger number of samples to be the variables to be predicted, so that the number of predicted samples is large enough to have value for reference. For instance, since the POS retail data set of the present invention has a larger number of data than the MR data set, the POS retail data set is chosen to fit into the statistical model for predicting the third data set. In theory, the third data set is generated by using the statistical model to predict a new data set according to each item in the MR data set, so that the new data set has the same number of data as the POS data set has. However, as the original POS data set does not contain all the items in the MR data set, the predicted data set does not reflect the actual condition of the original POS data set. Therefore, the third data set can be defined as a predicted data set or an estimated data set. The prediction or estimation can be conducted by various statistical software, such as Statistical Package for Social Science (SPSS), SAS and Statistica.
   As described above, the third data set generated in the step c) is estimated by the statistical model according to the number of samples in the first data set. Therefore, if a proper model is used as the statistical model, the third data set should theoretically be consistent with the second data set. In other words, the predicted data set should be identical to the original data set. However, the system- selected statistical model has minor errors that result in a difference between the predicted values and the original data. Hence, the step d) is intended to perform a data check, wherein the predicted values are compared with the original data to determine an accuracy of the predicted values. The data check can be automatically completed by the system. If the accuracy is poor, the system will automatically create a different statistical model until the optimal model is found, or modify corresponding parameters so that all the data are predicted. Basically, an 80% to 90% accuracy is acceptable. As this criterion may be met in the step d) by a plurality of data entries, the system may store all such data entries or the data entry having the highest accuracy, as appropriate. Besides, before the accuracy of the third data set is determined, it is preferable to clean the data for a second time to remove all unreasonable or incorrect data, so that the accuracy can be determined more correctly.

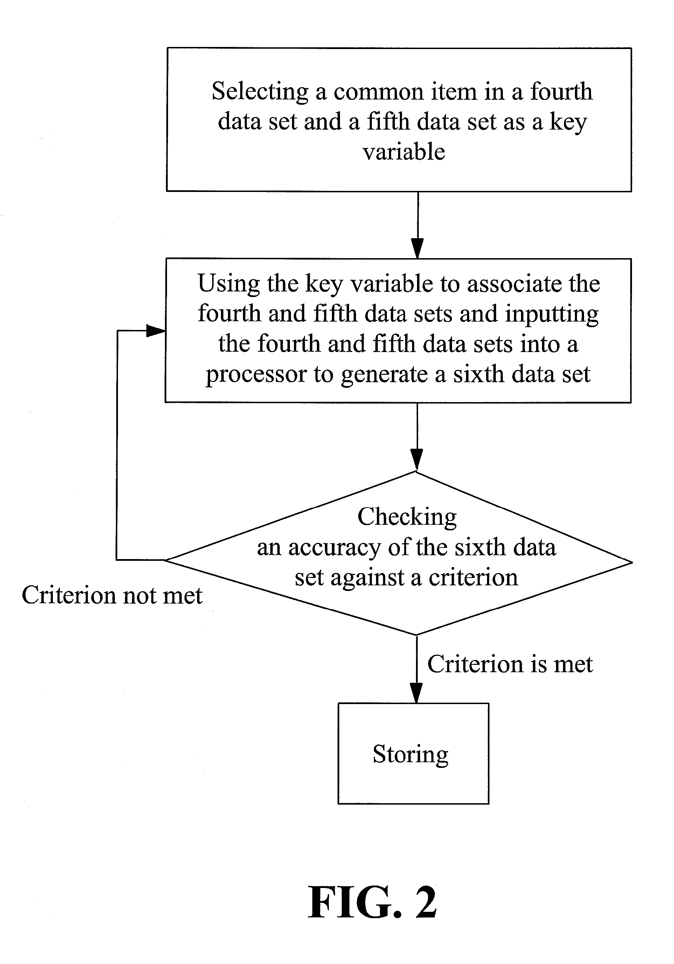

   Fig. 2 is a flow chart of a second embodiment of the present invention, wherein two data sets to be integrated are assumed to coexist and have at least one common item. The data integration method according to the second embodiment of the present invention comprises the steps of:
e) selecting a common item in a fourth data set and a fifth data set as a key variable;
f) using the key variable to associate the fourth and fifth data sets and inputting the fourth and fifth data sets into a processor to generate a sixth data set; and
g) checking an accuracy of the sixth data set against a criterion and storing the sixth data set if the criterion is met or resuming the step f) if the criterion is not met.

Please refer to the first, second and third data sets for features of the fourth, fifth and sixth data sets.

Operation of the aforementioned steps is now described with reference to an exemplary embodiment of the present invention, wherein the steps involving the first, second and third data sets are demonstrated.

### Exemplary embodiment

An exemplary embodiment of the present invention is applied to a beef noodle restaurant. The purchase record (such as a copy of invoice, hereinafter referred to as POS) of a customer visiting the restaurant is defined as the first data set in the aforementioned steps, while the second data set is a market research questionnaire (hereinafter referred to as MR) designed by the restaurant to investigate consumer psychology and habits.

**Table 1**

| POS | | MR |
|---|---|---|
| Restaurant No. | | Questionnaire No. |
| Invoice No. | | Name of restaurant |
| Date of purchase | | Invoice No. |
| Time period | | Exact date of interview |
| Year | | Date of interview |
| Month | | Exact time of interview |
| Day | | Time period of interview |
| Mark for working day | | Gender |
| Mark for holiday | | Age range |
| Side dish | | Occupation |
| (Quantity) | | Monthly income |
| Soup | | How many people are there in the interviewee's party to eat |
| | | at the restaurant this time? |
| (Quantity) | | Who are in the interviewee's party? |
| Promoted product | | How does the interviewee know the restaurant and decide to visit the restaurant? |
| (Quantity) | | How many times has the interviewee visited the restaurant this year, including this time? |
| Dessert | | How many days ago did the interviewee last visit the restaurant? |
| (Quantity) | | How often will the interviewee eat at the restaurant? |
| Regular meal | | How much money, by average, will be spent per person in the interviewee's next visit to the restaurant? |
| (Quantity) | | Who pays the bill this time? |
| Main course | | Where on the map did the interviewee come from? |
| (Quantity) | | How did the interviewee come to the restaurant? |
| | | Where on the map is the interviewee going after the meal? |
| Braised food specialty | | How will the interviewee go to the intended destination after the meal? |
| (Quantity) | | |
| Beverage | | |
| (Quantity) | | |
| Total price | | |
| Total items sold | | |
| Table No. | | |
| Number of customers | | |

As shown in Table 1, the POS records such items as restaurant number, invoice number, date of purchase, time period, ... and number of customers, whereas the MR includes such items as questionnaire number, name of restaurant, invoice number, exact date of interview, ... and how will the interview go to the intended destination after the meal. The POS is a transaction record containing data having a passive attribute. On the other hand, the data in the MR are collected as desired by the data collector and therefore have an active attribute. In this exemplary embodiment, the items and contents of the MR can be designed according to at least one item in the POS. Alternatively, the MR may coexist with the POS and has at least one item in common with the POS. In this exemplary embodiment, for instance, the POS and the MR share the same item of invoice number. In addition, the POS and the MR have different numbers of samples. Generally speaking, samples in the POS will accumulate to a considerable number as more business is transacted, whereas the number of samples in the MR is limited by human and financial resources available for interviewing and therefore far smaller than the number of samples in the POS. In the exemplary embodiment, for instance, the POS has 7400 data but the MR has only 300 data. The items in the MR can be increased as needed to cover more comprehensive information than the sheer transaction records in the POS.

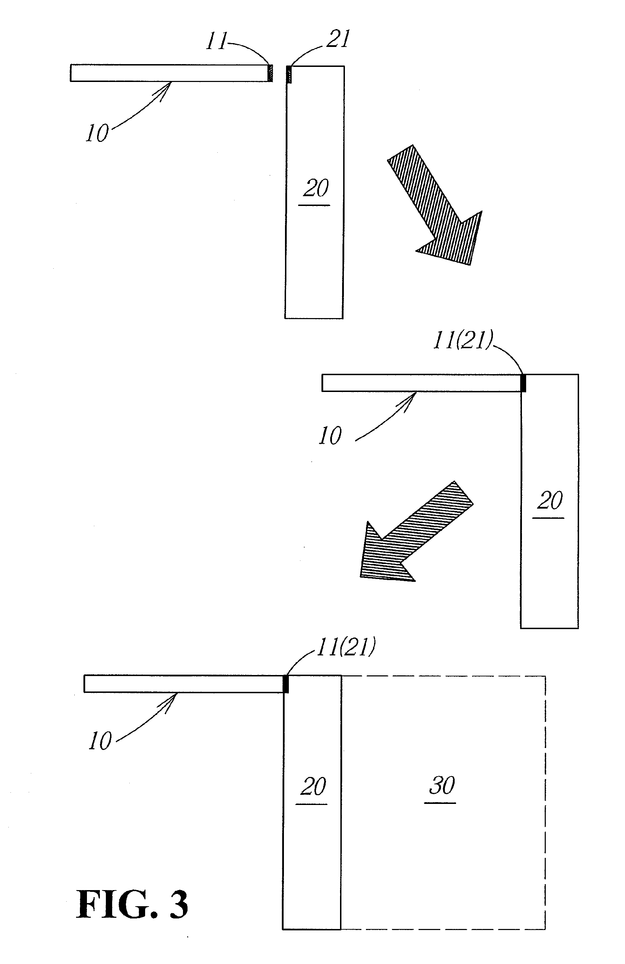

Referring to Fig. 3, the POS 10 and the MR 20 have common items 11, 21, which are chosen as a key variable, as is the case with the invoice number in the exemplary embodiment. The key variable 11, 21 is used to connect the POS 10 and the MR 20, before the POS 10 and the MR 20 are sent into a system for integration. After a statistical model is established, prediction is made by the statistical model to generate a new data set 30.

During the process described above, the statistical model is established by calculation based on the integrated POS and MR (i.e., POS+MR). Assume the following statistical model is obtained after calculation: Y (purchase intention) = 2.15 * total price + 0.19 * visiting time - 0.73 * number of customers ^{2+e}, wherein "total price", "visiting time" and "number of customers" are items or variables in the POS, and "purchase intention" is an item or variable in the MR. To predict the new data set 30, a data from the POS is fitted into the equation for Y to obtain a new value of purchase intention. When the fitting process is repeated for all the data in the POS (i.e., after the fitting process is performed 7400 times), there will be 7400 new values of purchase intention. In theory, the predicted values of purchase intention should be identical to the purchase intention values in the original MR because the same variables are used. For instance, the item of "purchase intention" in the 300 data in the MR should be exactly reproduced in the new data set 30, were it not for the minor errors resulting from the statistical model. However, if the new data set 30 is 80% to 90% accurate as compared with the original data set, the new data set 30 is basically considered as having value for reference. In order to determine the accuracy of the new data set 30, the system can be set to execute a checking process at least once. For instance, the checking process can be executed for only one time after the new data set is predicted. Alternatively, a preliminary check is performed during the prediction process, and followed by a final check that is carried out when the new data set is completed. For instance, as soon as 300 new data are successfully generated, a check can be performed by comparing them with the 300 original data in the MR. If the new data are 80% to 90% accurate as compared with the MR, the prediction process can go on until all the data are predicted. Otherwise, another statistical model can be established or parameters modified before the prediction process resumes, until data meeting the aforementioned criterion are obtained.

As shown in Fig. 3, after the 300 data in the MR 20 and the 7400 data in the POS 10 are connected by the key variable 11, 21 and inputted into the system for processing, 7400 data having features of both the POS and the MR are generated by prediction, estimation or mapping and thus form the new data set 30. This data integration method allows dimensions unseen in the POS and the MR to be fully exposed in the new data set 30. For instance, the POS does not show consumers' detailed personal data or the motives or intention for transaction, while the MR does not contain transaction details such as what was eaten and how much money was spent. In addition, the data integration method of the present invention also provides scientific estimation, whereby a data set having a small number of samples, such as the MR, can be expanded into a data set having a larger number of samples, such as the POS. Thus, the problem of asymmetry regarding the number of samples and the items of contents is solved, thereby maximizing data use. Furthermore, a data set covering more dimensions and having higher value for reference can be obtained and serve as a reference for all kinds of studies and decision making.

The embodiments of the present invention described above are illustrative only and not intended to limit the scope of the present invention. For instance, although the MR and the POS are defined by way of example as the first and second data sets in the preferred embodiments, other possible embodiments may include different types of data or information, such as industry information, weather data and human resources data. In addition, while the first and second data sets in the preferred embodiments are defined as active and passive data sets, the active and passive data sets actually comprise any data sets having asymmetric contents or numbers of samples. Therefore, the first and second data sets, instead of one being an active data set and the other being a passive data set, can both be active data sets or passive data sets. Hence, all equivalent changes or modifications which do not depart from the spirit of the present invention should be encompassed by the appended claims.

## Claims

1. A data integration method, comprising steps of:
a) selecting an item from a first data set as a key variable;
b) generating a second data set including the key variable;
c) using the key variable to associate the first and second data sets and inputting the first and second data sets into a processor to generate a third data set; and
d) checking an accuracy of the third data set against a criterion and storing the third data set if the criterion is met or resuming the step c) if the criterion is not met.

2. The data integration method as claimed in Claim 1, wherein the first and second data sets are defined as active data sets.

3. The data integration method as claimed in Claim 1, wherein the first and second data sets are defined as passive data sets.

4. The data integration method as claimed in Claim 1, wherein one of the first and second data sets is defined as an active data set and the other is defined as a passive data set.

5. The data integration method as claimed in Claim 1, wherein the first data set is a passive data set and the second data set is an active data set.

6. The data integration method as claimed in Claim 1, wherein the third data set is a predicted, estimated or mapped data set.

7. The data integration method as claimed in Claim 1, wherein the processor in the step c) comprises steps of integrating the first and second data sets to establish a statistical model; and using the statistical model in combination with the first data set to generate the third data set.

8. The data integration method as claimed in Claim 1, wherein the checking of the accuracy of the third data set in the step d) further comprises a preliminary checking step and a final checking step.

9. The data integration method as claimed in Claim 1, wherein the third data set stored in the step d) has a highest accuracy.

10. The data integration method as claimed in Claim 1, wherein the criterion for the accuracy of the third data set is being 80% to 90% accurate.

11. The data integration method as claimed in Claim 1, wherein one of the step c) and the step d) is preceded by a step of data cleaning.

12. A data integration method, comprising steps of:
e) selecting a common item in a fourth data set and a fifth data set as a key variable;
f) using the key variable to associate the fourth and fifth data sets and inputting the fourth and fifth data sets into a processor to generate a sixth data set; and
g) checking an accuracy of the sixth data set against a criterion and storing the sixth data set if the criterion is met or resuming the step f) if the criterion is not met.
